# EUROPEAN PATENT APPLICATION

(11) **EP 2 263 932 A2**
(43) Date of publication of application: **22.12.2010**
(21) Application number: 10166193.2
(22) Date of filing: 16.06.2010
(51) Int. Cl.: B62H 3/08

(54) **Bicycle stand**

(30) Priority: 18.06.2009 BE 200900367
(71) Applicant: Metasol BVBA, 8620 Nieuwpoort (BE)
(72) Inventor: Depoortere, Thierry Tony, 8501 Heule (BE)
(74) Representative: Ostyn, Frans

(57) **Abstract**

The invention relates to a bicycle stand (1) for parking a bicycle, wherein the bicycle can easily be parked, without getting damaged. This bicycle stand (1) therefore comprises:
- a wheel obstacle (2) over which part of the front wheel or the back wheel can be parked at parking of the bicycle, after which the front wheel, respectively the back wheel is lifted by this wheel obstacle (2);
- and a handlebar obstacle (3) and/or a saddle obstacle (8), against which the handlebar, respectively the saddle leans in that parked position of the bicycle;

and the wheel obstacle (2) is positioned in such a way with respect to the handlebar obstacle (3) and/or the saddle obstacle (8), that at parking the front wheel or the back wheel over the wheel obstacle (2), this wheel is entered between the wheel obstacle (2) and the handlebar obstacle (3), respectively the saddle obstacle (8).

## Description

The invention relates to a bicycle stand for parking at least one bicycle comprising a front wheel, a back wheel, a handlebar and a saddle.

In bicycle stands as e.g. described in DE 43 36 363 C, DE 10 2004 039 493 A1, DE 44 07 062 A1, US 2004/0251219 A1, US 5,096,068, etc. the front wheel of a bicycle is parked en held over a chord between two obstacles. When a bicycle however is not parked in a straight position in such a bicycle stand, it will tend to fall down sideways, but this will be prevented by the obstacles of the bicycle stand. Under this force, front wheels of bicycles often get bended. This effect even becomes greater, as more and more different widths of bicycle wheels are on the market. The obstacles then are provided for entering front wheels with the largest width, or for e.g. entering front wheels with two different widths. Bicycles with front wheels with widths differing from the width between the obstacles of the bicycle stand, tend even more to fall down sideways and get bended even more easily.

Another disadvantage of bicycle stands as in US 2004/0251219 A1 and US 5,096,068, is that a bicycle cannot be locked to such bicycle stand in a safe and comfortable way. Only locking the front wheel to a bicycle stand is not considered a safe way of locking a bicycle to a bicycle stand. Locking a bicycle stand near the ground to a bicycle stand is moreover not a comfortable way for persons to lock their bicycle, as they need to kneel or bend down in order to be able to lock their bicycle. When several bicycles are parked besides one another in such stands, it is moreover difficult to reach the bicycle stand between the wheels of the bicycles in order to lock the bicycle to the stand.

It is generally known that a bicycle is preferable locked with its frame to a bicycle stand in order to lock the bicycle in a safer way to the bicycle stand. Therefore, the bicycle stand of DE 43 36 363 C1, DE 10 2004 039 493 A1 and DE 44 07 062 A1 are provided with a locking bar at a certain height that is easily reached by a person standing straight, to which the frame of a bicycle can be locked in a comfortable way. However, in such stands, a bicycle can still become damaged by bending of the front wheel.

Bicycle stands in which the front wheel is not held between two obstacles over a chord are e.g. described in EP 0 628 471 A1 and GB 2 457 989 A. In such bicycle stands bicycles are parked sideways against an obstacle. The advantages of these bicycle stands is that bicycles do not easily get damaged at parking in these stands and that the frame of a bicycle can be locked to the bicycle stand in a safe and comfortable way. A great disadvantage is however that bicycle stands wherein bicycles are placed sideways against obstacles, require much more space for parking several bicycles next to one another, without placing bicycles against each other. In order to save space, bicycles are in practice often placed against each other at such bicycle stands, such that a first parked bicycle is not longer reachable after a second bicycle has been parked and locked against the first parked bicycle.

It is therefore an object of this invention to provide a bicycle stand in which a bicycle can easily be parked, without easily getting damaged, at which this bicycle can easily be locked, without a person needing to kneel or bend down and which does not require excessive space when parking several bicycles next to one another in such a bicycle stand.

This object is achieved by providing a bicycle stand for parking at least one bicycle comprising a front wheel, a back wheel, a handlebar and a saddle, wherein this bicycle stand comprises:
- a wheel obstacle over which a main part of the front wheel or a main part of the back wheel can be parked at parking of the bicycle, such that in a parked position of the bicycle, the front wheel, respectively the back wheel is lifted by this wheel obstacle;
- and a handlebar obstacle and/or a saddle obstacle, against which the handlebar, respectively the saddle leans in a parked position of the bicycle with the front wheel, respectively the back wheel parked over the wheel obstacle;
and wherein the wheel obstacle is positioned in such a way with respect to the handlebar obstacle and/or the saddle obstacle, that at parking of the bicycle with the front wheel or the back wheel over the wheel obstacle, the frond wheel, respectively the back wheel is entered between the wheel obstacle and the handlebar obstacle, respectively between the wheel obstacle and the saddle obstacle.

When a main part of the front wheel or the back wheel is parked over the wheel obstacle, more than half of this wheel extends over the wheel obstacle, such that this main part of the wheel actually hangs over this wheel obstacle under gravity force. Without the handlebar obstacle, respectively the saddle obstacle, against which the handlebar, respectively the saddle leans, this wheel would under the gravity force roll over the wheel obstacle. The handlebar obstacle, respectively the saddle obstacle however prevents the bicycle from rolling farther beyond the wheel obstacle.

A bicycle stand according to this invention can comprise either only a handlebar obstacle, such that a bicycle can only be parked forwards in it, either only a saddle obstacle, such that a bicycle can only be parked backwards in it, either both a handlebar obstacle and a saddle obstacle, such that a bicycle can be parked both frontwards and backwards in it.

In a bicycle stand according to the invention a bicycle can thus be parked forwards and/or backwards, thus requiring less space than a bicycle stand against which a bicycle is parked sideways. In this bicycle stand, the bicycle can moreover be parked without the front wheel or the back wheel needing to be held over a chord between obstacles. There is therefore no risk that this wheel will be bent between such obstacles. The bicycle is held straight by means of both the wheel obstacle and the handlebar obstacle, respectively the saddle obstacle.

In a preferred embodiment of a bicycle stand according to this invention, the bicycle stand comprises guiding elements for guiding at least part of the front wheel or the back wheel at entering of this wheel between the wheel obstacle and the handlebar obstacle, respectively between the wheel obstacle and the saddle obstacle.

Such guiding elements are provided just for guiding the front wheel or the back wheel at entering the bicycle stand, and will not hold this wheel over a large chord as in the bicycle stands of the state of the art. With such guiding elements, a bicycle will always be parked in a desired straight position in the bicycle stand at parking, while the handlebar leaning against the handlebar obstacle or the saddle leaning against the saddle obstacle will keep the bicycle in a straight position when parked. Such guiding elements are preferably obstacles defining a passage for entering the wheel, such that the wheel can be guided by the obstacles. The width between the obstacles is preferably wider than the width of the wheel, such that the wheel can easily be entered between them, without being clamped. This width can however not be much wider than the width of the wheel either, in order not to lose the guiding function thereof.

The front wheel and the back wheel of the bicycle preferably comprise a tyre and the guiding elements of a bicycle stand according to the invention are then preferable provided mainly for guiding the tyre of the front wheel or the back wheel at entering of the front wheel or the back wheel between the wheel obstacle and the handlebar obstacle, respectively between the wheel obstacle and the saddle obstacle. This prevents the guiding elements from holding the wheel over too long a distance, which would again increase the risk of the wheel getting damaged.

The guiding elements preferably comprise at least two upright elements, together forming a passage between which at least the tyre of the wheel can be entered, for guiding at least part of the respective wheel.

The passage between the uprights preferably comprises at least two different widths corresponding with at least two different widths of wheels of bicycles, and the largest width is then provided above the smallest width, such that the guiding means are provided for guiding at least part of the corresponding wheels of the bicycles with at least two different widths of wheels.

As explained before, the width of a passage corresponding with a certain wheel is preferably chosen as a compromise between a width with which the wheel would be clamped and a width which becomes too wide in order to be able to efficiently guide the wheel.

In a specific embodiment of a bicycle stand according to the invention, the guiding elements are made of metal rods. They could equally well be made of e.g. metal plates.

The handlebar obstacle and/or the saddle obstacle can more specifically be made of metal bars. In a bicycle stand according to this invention which comprises both a handlebar obstacle and a saddle obstacle, the saddle obstacle can then more specifically be made of the metal bar of the handlebar obstacle.

Also the wheel obstacle of a bicycle stand according to the invention can more specifically be made of metal bars.

A bicycle stand according to this invention which is easy and economically to manufacture, is mainly built of bars and rods, which are interconnected by means of welding.

In an installed position of the bicycle stand, the handlebar obstacle and/or the saddle obstacle and the wheel obstacle are preferably provided substantially above each other in a substantially vertical plane. In such a way, a bicycle stand for parking several bicycles next to one another can be build up in such a way that bicycles can easily be parked from opposite sides in the bicycle stand.

If such bicycle stand is provided with guiding elements, then these guiding elements are preferably provided in this plane of the handlebar obstacle and/or the saddle obstacle and the wheel obstacle.

A more specific bicycle stand according to this invention is a mobile bicycle stand.

Such mobile bicycle stand is preferably provided with interconnecting means for interconnecting this bicycle stand with a corresponding bicycle stand comprising corresponding interconnecting means.

In such a way, bicycle stands according to the invention can e.g. easily be used for great events, where a lot of bicycle parking space is required. They can be manufactured in modules for parking one or more bicycles, in lengths easily to handle and can be interconnected in order to obtain the desired length of bicycle parking space. At interconnecting bicycle stands, the stability of the bicycle stands will increase.

The interconnecting means of this bicycle stand can more specifically comprise a ring for receiving a hook of the corresponding bicycle stand and a hook for entering into a ring of the corresponding bicycle stand. Such interconnecting means are easy to manufacture and do not require special handlings in order to interconnect the bicycle stands.

This invention will now be commented on in greater depth based on the subsequent detailed description of preferred embodiments of bicycle stands according to this invention. The purpose of this description is exclusively to give illustrative examples and to indicate further advantages and special features of these embodiments of bicycle stands according to this invention, and may thus in no way be interpreted as a limitation of the scope of application of the invention or of the patent rights requested in the claims.

This detailed description will use reference numerals to refer to the appended drawings, in which:
- Figure 1 illustrates an embodiment of a bicycle stand according to this invention, for parking one bicycle, comprising a wheel obstacle, a handlebar obstacle and a saddle obstacle;
- Figure 2 illustrates an embodiment of a bicycle stand according to this invention for parking five bicycles.

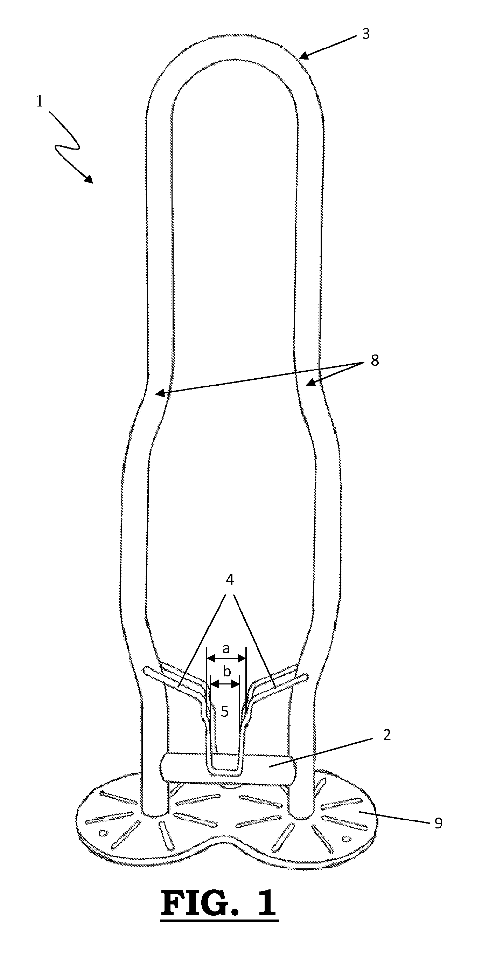

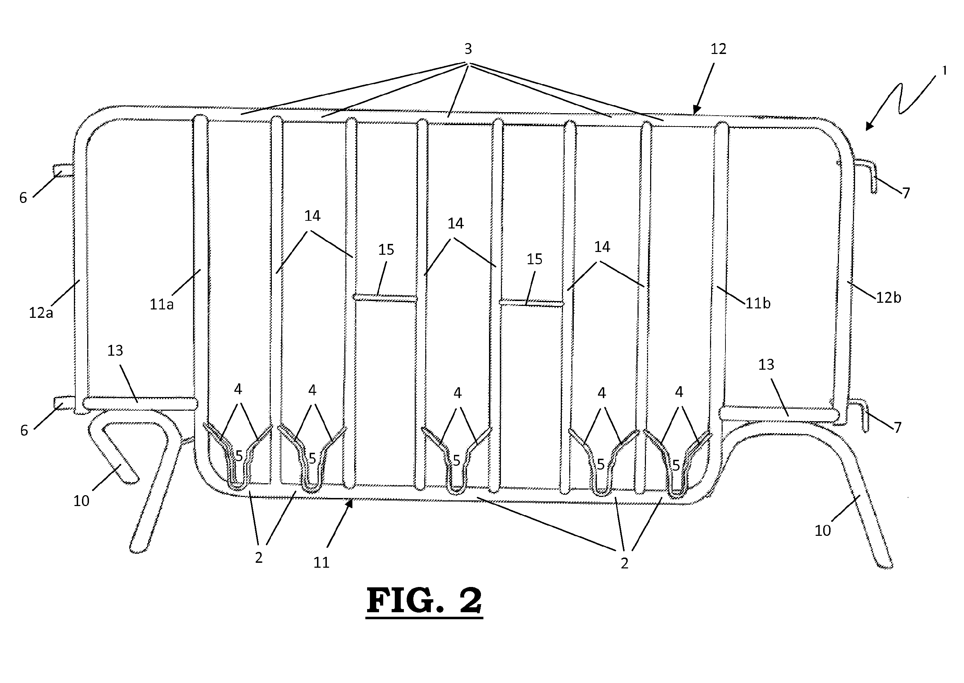

A bicycle stand (1) according to the invention as illustrated in figure 1 and figure 2, comprises a wheel obstacle (2) over which a main part of a wheel can be parked at parking of the bicycle, such that in a parked position of the bicycle, this wheel is lifted by the wheel obstacle (2).

In the bicycle stand (1) as illustrated in figure 1, one bicycle can be parked both forwards and backwards and from as well the front or the back of the bicycle stand (1) as illustrated.

Besides the wheel obstacle (2), the bicycle stand (1) as illustrated in figure 1, therefore comprises a handlebar obstacle (3) against which the handlebar of a bicycle leans in a parked position of the bicycle with the front wheel parked over the wheel obstacle (2). The bicycle stand (1) further comprises a saddle obstacle (8) against which the saddle of a bicycle leans in a parked position of the bicycle with the back wheel parked over the wheel obstacle. Thanks to the handlebar obstacle (3) a bicycle can therefore be parked forwards in the bicycle stand (1) and thanks to the saddle obstacle (8), a bicycle can therefore be parked backwards in the bicycle stand (1).

The wheel obstacle (2) is placed in such a way with respect to the handlebar obstacle (3), that at parking of the bicycle with the front wheel over the wheel obstacle (2), the front wheel is entered between the wheel obstacle (2) and the handlebar obstacle (3). The wheel obstacle (2) is furthermore placed in such a way with respect to the saddle obstacle (8), that at parking of the bicycle with the back wheel over the wheel obstacle (2), the back wheel is entered between the wheel obstacle (2) and the saddle obstacle (8).

The handlebar obstacle (3) and the saddle obstacle (8) are both made of a single metal bar, which is bent mainly in two parts which extend downwards in the bicycle stand (1) and between which a wheel of a bicycle can be entered. The downward parts come together in a top which forms the handlebar obstacle (3). The other sides of the downward parts are welded to a metal base (9) with which this bicycle stand (1) can be anchored to the ground where it is placed. The downward parts are furthermore both provided with a curved part, both curved parts together forming the saddle obstacle (8). At the base of the downward parts, at a certain distance to the ground, a second metal bar is welded, which forms the wheel obstacle (2).

In an installed position of the bicycle stand (1), the wheel obstacle (2), the handlebar obstacle (3) and the saddle obstacle (8) are provided substantially above each other in a substantially vertical plane. In this way, a bicycle can be parked in the bicycle stand (1) both from the front as from the back of the illustrated bicycle stand (1).

The heights of the wheel obstacle (2), the handlebar obstacle (3) and the saddle obstacle (8) are chosen in such a way that in a parked position a wheel parked over the wheel obstacle (2) is lifted by this wheel obstacle (2) and undergoes a downward gravity force. The further downward movement of this wheel is prevented as either, in case this wheel is a back wheel, the saddle of the bicycle is withheld by the saddle obstacle (8) either, in case this wheel is a front wheel, the handlebar of the bicycle is withheld by the handlebar obstacle (3), such that the bicycle as a whole is withheld from further movement.

In most bicycles on the market, the distance between the outer front of the bicycle and the handlebar is substantially equal to the outer back of the bicycle and the back of the saddle. Therefore the part of the front wheel of a bicycle that will pass the wheel obstacle (2) at parking the bicycle with the front wheel in the bicycle stand (1) will substantially be equal to the part of the back wheel that will pass the wheel obstacle (2) at parking the bicycle with the back wheel in the bicycle stand (1).

In the bicycle stand (1) as illustrated in figure 2, five bicycle can be parked together. Such bicycle stand (1) could equally well be manufactured for an other number of bicycles to be parked.

The bicycle stand (1) as illustrated in figure 2 is provided in such a way that in order to park the five bicycles, two bicycles should be parked from the front of the bicycle stand (1) as illustrated, while the other three bicycles should be parked from the back of the bicycle stand (1). All bicycles need to be parked forwards in the bicycle stand (1).

Besides five wheel obstacles (2), the bicycle stand (1) as illustrated in figure 2, therefore comprises five handlebar obstacles (3) against which the handlebar of a bicycle leans in a parked position of the bicycle with the front wheel parked over the wheel obstacle (2).

Such bicycle stand (1) could furthermore be provided with saddle obstacles (8), such that bicycles can also be parked backwards in the bicycle stand (1).

The wheel obstacles (2) and handlebar obstacles (3) are subdivided in units of two or one combination of obstacles (2, 3), between which a non-parking obstacle (15) is provided, which prevents parking a bicycle between the obstacles (2, 3) provided for the parking thereof. At parking of a bicycle in a non-parking zone, a bicycle could otherwise get damaged and/or hinder other bicycles from being parked. The non-parking obstacles (15) are furthermore provided in such a way, that they provide hand grips for easily handling the bicycle stand (1).

When a similar bicycle stand (1) is manufactured for parking 6 bicycles, wheel obstacles (2) and handlebar obstacles (3) could be provided two by two besides one another, interrupted by such non-parking obstacles (15).

Other combinations and variations are possible for parking any desired number of bicycles.

Each wheel obstacle (2) is placed in such a way with respect to the corresponding handlebar obstacle (3), that at parking of the bicycle with the front wheel over the wheel obstacle (2), the front wheel is entered between the wheel obstacle (2) and the corresponding handlebar obstacle (3).

The bicycle stand (1) is mainly built up of bars and rods which are welded together. All wheel obstacles (2) are part of a first metal bar (11). All handlebar obstacles (3) are part of a second metal bar (12). The first metal bar (11) is bent such that two vertical legs (11a, 11b) extend from the part of the metal bar (11) with the wheel obstacles (2). The ends of these vertical legs (11a, 11b) are welded to the second metal bar (12). Between the different wheel obstacles (2) and handlebar obstacles (3) additional rods (14) are welded between the first (11) and second (12) metal bars. The ends (12a, 12b) of the second metal bar (12) besides the handlebar obstacles (3) and extending outside the first metal bar (11) are bent downwards. Additional horizontal bars (13) are welded between the ends (12a, 12b) of the second metal bar (12) and the first metal bar (11). Stands (10) for the bicycle stand (1) are welded to these additional horizontal bars (13).

In an installed position of the bicycle stand (1), the wheel obstacles (2) and the handlebar obstacles (3) are provided substantially above each other in a substantially vertical plane. In this way, a bicycle can be parked in the bicycle stand (1) both from the front as from the back of the illustrated bicycle stand (1).

The heights of the wheel obstacles (2) and the handlebar obstacle (3) are chosen in such a way that in a parked position a front wheel parked over a wheel obstacle (2) is lifted by this wheel obstacle (2) and undergoes a downward gravity force. The further downward movement of this wheel is prevented as the handlebar of the bicycle is withheld by the corresponding handlebar obstacle (3), such that the bicycle as a whole is withheld from further movement.

This bicycle stand (1) as illustrated in figure 2 is a mobile bicycle stand (1). At the downwardly extending ends (12a, 12b) of the second metal bar (12), at one side of the bicycle stand (1), two rings (6) are welded, and at the other side of the bicycles stand (1) two hooks (7) are welded as interconnecting means (6, 7) for interconnecting several similar bicycle stands (1). The hooks (7) of a first bicycles stand (1) can therefore be entered in the rings (6) of a second bicycle stand (1) in order to interconnect these two bicycle stands (1).

Both bicycle stands (1) in figure 1 and in figure 2 further comprise guiding elements (4) for guiding at least the tyre of a wheel of a bicycle at entering this wheel between the wheel obstacle (2) and the saddle obstacle (8) and/or between the wheel obstacle (2) and the handlebar obstacle (3).

Two bended metal rods are welded at opposite sides of the wheel obstacle (2) to form the guiding elements (4). These guiding elements (4) could equally well be made of e.g. metal plates, which are welded to the wheel obstacle (2).

The metal rods of the guiding elements (4) are bent in such a way that they comprise at least two upright elements, together forming a passage (5) between which at least the tyre can be entered, for guiding at least part of the respective wheel.

This passage (5) between the uprights comprises two different widths (a, b) corresponding with two different widths of wheels of bicycles. The largest width (a) is provided above the smallest width (b), such that the guiding means (4) are provided for guiding at least part of the corresponding wheel of the bicycles with two different widths of wheels.

The widths (a, b) between the guiding means (4) forming the passage (5) are preferably wider than the width of the corresponding wheel, such that the wheel can easily be entered between them, without being clamped. These widths (a, b) can however not be much wider than the width of the corresponding wheel either, in order not to lose the guiding function thereof.

Such guiding elements (4) are provided just for guiding the front wheel or the back wheel at entering the bicycle stand (1), and will not hold this wheel over a large chord as in the bicycle stands of the state of the art. With such guiding elements (4), a bicycle will always be parked in a desired straight position in the bicycle stand (1) at parking, while the handlebar leaning against the handlebar obstacle (3) or the saddle leaning against the saddle obstacle (8) will keep the bicycle in a straight position when parked.

Bicycles which are parked in the illustrated bicycle stands (1) can be locked in an easy and safe way (with their frame) to the rods of the bicycle stands (1), without a person needing to bend down or kneel.

## Claims

1. Bicycle stand (1) for parking at least one bicycle comprising a front wheel, a back wheel, a handlebar and a saddle, **characterised in that** this bicycle stand (1) comprises:
- a wheel obstacle (2) over which a main part of the front wheel or a main part of the back wheel can be parked at parking of the bicycle, such that in a parked position of the bicycle, the front wheel, respectively the back wheel is lifted by this wheel obstacle (2);
- and a handlebar obstacle (3) and/or a saddle obstacle (8), against which the handlebar, respectively the saddle leans in a parked position of the bicycle with the front wheel, respectively the back wheel parked over the wheel obstacle (2);
and that the wheel obstacle (2) is positioned in such a way with respect to the handlebar obstacle (3) and/or the saddle obstacle (8), that at parking of the bicycle with the front wheel or the back wheel over the wheel obstacle (2), the front wheel, respectively the back wheel of the bicycle is entered between the wheel obstacle (2) and the handlebar obstacle (3), respectively between the wheel obstacle (2) and the saddle obstacle (8).

2. Bicycle stand (1) according to claim 1, **characterised in that** the bicycle stand (1) comprises guiding elements (4) for guiding at least part of the front wheel or the back wheel at entering of this wheel between the wheel obstacle (2) and the handlebar obstacle (3), respectively between the wheel obstacle (2) and the saddle obstacle (8).

3. Bicycle stand (1) according to claim 2, **characterised in that** the front wheel and the back wheel of the bicycle comprise a tyre and that the guiding elements (4) are provided mainly for guiding the tyre of the front wheel or the back wheel at entering of the front wheel or the back wheel between the wheel obstacle (2) and the handlebar obstacle (3), respectively between the wheel obstacle (2) and the saddle obstacle (8).

4. Bicycle stand (1) according to claim 2 or 3, **characterised in that** the guiding elements (4) comprise at least two upright elements, together forming a passage (5) between which at least the tyre can be entered, for guiding at least part of the respective wheel.

5. Bicycle stand (1) according to claim 4, **characterised in that** the passage (5) between the uprights comprises at least two different widths (a, b) corresponding with at least two different widths of wheels of bicycles, and that the largest width (a) is provided above the smallest width (b), such that the guiding means (4) are provided for guiding at least part of the corresponding wheel of the bicycles with at least two different widths of wheels.

6. Bicycle stand (1) according to any of claims 2 to 5, **characterised in that** the guiding elements (4) are made of metal rods.

7. Bicycle stand (1) according to any of the preceding claims, **characterised in that** the handlebar obstacle (3) and/or the saddle obstacle (8) are made of metal bars.

8. Bicycle stand (1) according to claim 7, **characterised in that** the bicycle stand comprises both a said handlebar obstacle (3) and a said saddle obstacle (8) and that the saddle obstacle (8) is made as part of the metal bar of the handlebar obstacle (3).

9. Bicycle stand (1) according to any of the preceding claims, **characterised in that** the wheel obstacle (2) is made of a metal bar.

10. Bicycle stand (1) according to any of claims 6 to 9, **characterised in that** the bicycle stand (1) is mainly built of bars and rods, which are interconnected by means of welding.

11. Bicycle stand (1) according to any of the preceding claims, **characterised in that** in an installed position of the bicycle stand (1), the handlebar obstacle (3) and/or the saddle obstacle (8) and the wheel obstacle (2) are provided substantially above each other in a substantially vertical plane.

12. Bicycle stand (1) according to claim 11, **characterised in that** the guiding elements (4) are provided in the said plane of the handlebar obstacle (3) and/or the saddle obstacle (8) and the wheel obstacle (2).

13. Bicycle stand (1) according to any of the preceding claims, **characterised in that** this bicycle stand (1) is a mobile bicycle stand (1).

14. Bicycle stand (1) according to claim 13, **characterised in that** this bicycle stand (1) is provided with interconnecting means (6, 7) for interconnecting this bicycle stand (1) with a corresponding bicycle stand (1) comprising corresponding interconnecting means (6, 7).

15. Bicycle stand (1) according to claim 14, **characterised in that** the interconnecting means (6, 7) of this bicycle stand (1) comprise a ring (6) for receiving a hook (7) of the corresponding bicycle stand and a hook (7) for entering into a ring (6) of the corresponding bicycle stand.
